# EUROPEAN PATENT APPLICATION

(11) **EP 4 832 136 A1**
(43) Date of publication of application: **28.10.2026**
(21) Application number: 24905413.1
(22) Date of filing: 15.05.2024
(51) Int. Cl.: H01M 10/0566, H01M 10/0567, H01M 10/0569, H01M 10/0525

(54) **LITHIUM ION BATTERY ELECTROLYTE, PREPARATION METHOD THEREFOR AND USE THEREOF**

(30) Priority: 19.12.2023 CN 202311751401
(71) Applicant: SVOLT Energy Technology Co., Ltd., Changzhou, Jiangsu 213200 (CN)
(72) Inventor: WANG, Yingying, Hangzhou, Jiangsu 213200 (CN); SHENG, Jie, Hangzhou, Jiangsu 213200 (CN); PANG, Chunguang, Hangzhou, Jiangsu 213200 (CN); QIN, Bingsheng, Hangzhou, Jiangsu 213200 (CN)
(74) Representative: Michalski Hüttermann & Partner mbB
(86) International application number: PCT/CN2024/093474
(87) International publication number: WO 2025/129909

(57) **Abstract**

A lithium-ion battery electrolyte, a preparation method and use thereof. The lithium-ion battery electrolyte comprises a lithium salt, an organic solvent and an additive, the organic solvent comprising a nitrile-based solvent. The room temperature conductivity σ of the lithium-ion battery electrolyte satisfies the following relational expression: 15 ≤ (K×ε×γ)/µ ≤ 30, wherein K=0.02-0.07, ε is dielectric constant, γ is mass fraction of nitrile-based solvent in the lithium-ion battery electrolyte, and µ is viscosity of the lithium-ion battery electrolyte at room temperature. The electrolyte can effectively inhibit reductive decomposition of a nitrile-based solvent, and has the characteristic of weak solvation binding energy, and still has relatively high ionic conductivity at low temperatures, exhibiting relatively good fast-charging performance. Meanwhile, a battery prepared based on said electrolyte has excellent low-temperature capacity retention rate, thereby effectively improving the battery performance such as safety, energy density, power, rate, cycle performance.

## Description

The present disclosure claims priority to Chinese Patent Application No. 202311751401.6, filed with the China National Intellectual Property Administration on December 19, 2023, which is incorporated herein by reference in entirety.

### TECHNICAL FIELD

The present disclosure belongs to the technical field of lithium-ion battery materials, and specifically relates to a lithium-ion battery electrolyte, a preparation method and use thereof.

### BACKGROUND ART

Lithium-ion batteries play a crucial role in environmental and energy-related fields. Improving ionic conductivity of an electrolyte is essential for enhancing performances of next-generation batteries. Adding an electrolyte with high-conductivity can significantly reduce DCR of a battery cell, resulting in significant changes in charge-discharge performance. Such an electrolyte is extremely important in the field of low-temperature and thick-electrode applications. Since battery performance depends not only on resistance of the electrolyte but also on resistance at an electrode/electrolyte interface, a nitrile-based solvent, such as a non-aqueous electrolyte containing acetonitrile (AN), offer an excellent performance balance between relative permittivity and viscosity, thus attracting widespread attention for potential application in electric vehicle (EV) batteries. However, on a graphite negative electrode, the nitrile-based solvent itself is not stable against electrochemical reduction. Overcoming the challenge will enable commercial applications of the nitrile-based solvent in a power battery industry.

How to suppress reductive decomposition of a non-aqueous electrolyte containing a nitrile under low-concentration lithium salt condition and achieving high ionic conductivity battery performance over a wide temperature range remains a significant challenge. Methods for inhibiting thereduction of acetonitrile (AN) include: 1. Yamada *et al*. improved the reduction stability of AN by dissolving a high concentration of lithium salt in AN (exceeding 2 mol/L); 2. Peng *et al.* reported a development of a high-power lithium metal battery, which was achieved by using an aniline-based electrolyte in a high concentration and ethylene carbonate (VC) as an additive; and 3) a method for effectively inhibiting the reduction decomposition of AN is to use a negative electrode active material, in which lithium-ions are inserted at a higher potential than the reduction potential of AN. For example, researchers at Toshiba reported a battery that can inhibit the reduction decomposition of AN, and the battery used lithium titanate as the negative electrode.

However, reducing the reductive decomposition of the nitrile-based solvent by increasing the concentration of the lithium salt in the prior art is not advantageous in a low-cost electrolyte nowadays. Furthermore, when the concentration of the lithium salt increases, viscosity of the electrolyte increases, which relatively reduces the lithium-ion conductivity to some extent, resulting in a decrease in cell cycling and rate performance.

Therefore, how to effectively suppress the reductive decomposition of the nitrile-based solvent while maintaining a relatively high lithium-ion conductivity and possessing excellent cell cycling and rate performance is a technical challenge that urgently needs to be studied at present.

### SUMMARY

The present disclosure provides a lithium-ion battery electrolyte, a preparation method and use thereof. The present disclosure designs a lithium-ion battery electrolyte that satisfies the above relational expression. This type of electrolyte can not only effectively inhibit the reductive decomposition of a nitrile-based solvent and has a characteristic of weak solvation binding energy, but also maintain high ionic conductivity at low temperatures. At high rates, solvated lithium-ions can be quickly desolvated, exhibiting good fast-charging performance. Meanwhile, fast lithium-ion transport at low temperatures and desolvation can ensure that the battery has excellent low-temperature capacity retention, effectively improving battery performance, such as safety, energy density, power, rate and cycling performance.

In the first aspect, the present disclosure provides a lithium-ion battery electrolyte, wherein the lithium-ion battery electrolyte includes a lithium salt, an organic solvent and an additive, and the organic solvent includes a nitrile-based solvent; and
a room temperature conductivity σ of the lithium-ion battery electrolyte satisfies following relational expression:
15 ≤ (K×ε×γ)/µ ≤ 30, wherein, K=0.02-0.07, ε is dielectric constant, γ is mass fraction of the nitrile-based solvent in the lithium-ion battery electrolyte, and µ is viscosity of the lithium-ion battery electrolyte at room temperature.

The present disclosure designs a lithium-ion battery electrolyte that satisfies the above relational expression. This type of electrolyte can not only effectively inhibit the reductive decomposition of a nitrile-based solvent and has a characteristic of weak solvation binding energy, but also maintain high ionic conductivity at low temperatures. At high rates, solvated lithium-ions can be quickly desolvated, exhibiting good fast-charging performance. Meanwhile, fast lithium-ion transport at low temperatures and desolvation can ensure that the battery has excellent low-temperature capacity retention, effectively improving battery performance, such as safety, energy density, power, rate and cycling performance.

The electrolyte provided by the present disclosure exhibits good compatibility with negative electrode, does not cause damage to the negative electrode, and can form an SEI (solid electrolyte interface) film on the negative electrode, inhibiting a reaction at the interface between the electrolyte and the negative electrode material, reducing HF generation, and solving the problem such as battery swelling and fast capacity decay during cycling/high-temperature storage.

In the present disclosure, the room temperature conductivity σ of the lithium-ion battery electrolyte satisfies the following relational expression: 15≤(K×ε×γ)/µ≤30. The viscosity of the electrolyte can be changed by adjusting the content of low-viscosity organic solvent, thereby improving the dissociation ability of lithium-ions and increasing conductivity to meet requirements for fast charging.

Conductivity is one of the most practically significant parameters for lithium-ion battery electrolytes. The conductivity of the electrolyte has a significant impact on internal resistance and rate performance of the battery, providing direction for electrolyte design. From the perspective of solvents, the main factors affecting conductivity of the electrolyte are the dielectric constant and viscosity of the solvent. By reducing the viscosity of the solvent and increasing the dielectric constant of the solvent, the conductivity of the electrolyte can be improved without the need to add additional lithium salts.

It should be noted that the present disclosure does not specifically limit the room temperature. For example, the room temperature can be 25±5 °C, including 20 °C, 25 °C, or 30 °C.

In the present disclosure, K = 0.02-0.07, for example, K can be 0.02, 0.03, 0.04, 0.05, 0.06, or 0.07, and so on.

As a preferred technical solution of the present disclosure, the room temperature conductivity σ is 15 mS·cm⁻¹ to 30 mS·cm⁻¹, for example, the room temperature conductivity can be 15 mS·cm⁻¹, 20 mS·cm⁻¹, 25 mS·cm⁻¹, or 30 mS·cm⁻¹, and so on.

Preferably, µ is 1.5 mPa·s to 2.1 mPa·s, for example, µ can be 1.5 mPa·s, 1.6 mPa·s, 1.7 mPa·s, 1.8 mPa·s, 1.9 mPa·s, 2 mPa·s, or 2.1 mPa·s, and so on.

Preferably, ε is 20-40, for example, ε can be 20, 25, 30, 35, or 40, and so on.

Preferably, γ is 15wt%-50wt%, for example, γ can be 15wt%, 20wt%, 25wt%, 30wt%, 35wt%, 40wt%, 45wt%, or 50wt%, and so on.

In the present disclosure, if the mass fraction of the nitrile-based solvent in the lithium-ion battery electrolyte is too small, the viscosity and the conductivity of the electrolyte will be too low, hindering lithium-ion desolvation and leading to a decrease in fast-charging performance; and if the mass fraction of the nitrile-based solvent in the lithium-ion battery electrolyte is too large, exfoliation of a graphite negative electrode may lead to a sudden capacity drop and gas evolution during cycling.

As a preferred technical solution of the present disclosure, the structural formula of the nitrile-based solvent is 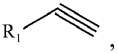 wherein R₁ is -CₙH₂ₙ₊₁ or R₁ is -C₆H₅, and n=1-4. For example, R₁ can be -CH₃ or -C₂H₅, and so on.

Preferably, the nitrile-based solvent includes any one or a combination of at least two selected from the group consisting of acetonitrile, propionitrile, methoxypropionitrile, isopropionitrile, butanedinitrile, butyronitrile, adiponitrile, pentanenitrile, pentanedinitrile, decanedinitrile, acrylonitrile, cyclohexanecarbonitrile, and phthalonitrile.

Preferably, the organic solvent further includes a carbonate solvent.

Preferably, the carbonate solvent includes a combination of any two or at least three selected from the group consisting of ethylene carbonate, propylene carbonate, ethyl methyl carbonate, diethyl carbonate, and dimethyl carbonate.

As a preferred technical solution of the present disclosure, the additive includes any one or a combination of at least two selected from the group consisting of a pyridine-based additive, a lithium salt additive, and an ester-based additive, preferably a combination of the pyridine-based additive, the lithium salt additive, and the ester-based additive.

In the present disclosure, the addition of a pyridine compound can preferentially form a dense and stable protective film on a negative electrode side, inhibiting oxidation-reduction reactions of the electrolyte on surfaces of the positive and negative electrodes, stabilizing the active materials of the positive and negative electrodes, improving cycling storage performance, reducing high-temperature gas evolution of the battery cell, and enhancing safety performance of the battery cell.

Preferably, a content of the pyridine-based additive accounts for 1wt%-9wt% of a content of the nitrile-based solvent, for example, it can be 1wt%, 2wt%, 3wt%, 4wt%, 5wt%, 6wt%, 7wt%, 8wt%, or 9wt%, and so on.

In the present disclosure, pyridine ring compounds can form a dense and stable protective film in the negative electrode of a lithium-ion battery, suppressing the volume expansion of the negative electrode active material during a process of charge and discharge. If the content of the pyridine-based additive is too small relative to the content of the nitrile solvent, film-forming quality is poor, and the nitrile-based solvent will cause exfoliation of the graphite, resulting in a cycle failure. If the content of the pyridine-based additive is too large relative to the content of the nitrile solvent, it will lead to an excessively high thickness of film forming, increased impedance, and decreased cycling performance.

Preferably, the structural formula of the pyridine-based additive is 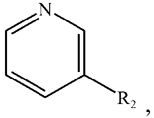 wherein R₂ is any one of -H, -F, -CₙH₂ₙ₊₁, or -CₙH₂ₙ₋₁, and n=1-3. For example, R₂ can be -CH₃ or -CH₂.

Preferably, the lithium salt additive includes any one or a combination of at least two selected from the group consisting of an oxalatoborate, an oxalatophosphate, and a difluorophosphate.

Preferably, the ester-based additive includes a combination of any three or at least four selected from the group consisting of vinylene carbonate, vinyl ethylene carbonate, fluoroethylene carbonate, ethylene sulfate, and methylene methanedisulfonate.

It should be noted that vinylene carbonate needs to be replenished by a secondary injection to stabilize the negative electrode interface, thereby enhancing the cycling performance.

Preferably, the content of the lithium salt additive accounts for 0.1wt%-0.8wt% of the total amount of the lithium-ion battery electrolyte, for example, the content can be 0.1wt%, 0.2wt%, 0.3wt%, 0.4wt%, 0.5wt%, 0.6wt%, 0.7wt% or 0.8wt%, and so on.

Preferably, the content of the ester-based additive accounts for 2wt% -7wt% of the total amount of the lithium-ion battery electrolyte, for example, the content can be 2wt%, 3wt%, 4wt%, 5wt%, 6wt%, or 7wt%, and so on.

As a preferred technical solution of the present disclosure, the lithium salt includes lithium hexafluorophosphate and lithium bis(fluorosulfonyl)imide.

Preferably, the concentration of the lithium salt in the lithium-ion battery electrolyte is 0.8 mol/L-2.5 mol/L, for example, the concentration can be 0.8 mol/L, 1 mol/L, 1.5 mol/L, 2 mol/L, or 2.5 mol/L, and so on.

Preferably, the content of the lithium salt accounts for 10wt%-20wt% of the total amount of the lithium-ion battery electrolyte, for example, the content can be 10wt%, 12wt%, 14wt%, 16wt%, 18wt%, or 20wt%, and so on.

In the second aspect, the present disclosure provides a preparation method for the lithium-ion battery electrolyte as in the first aspect, and the preparation method includes following steps:
mixing a lithium salt, an additive, and an organic solvent to obtain the lithium-ion battery electrolyte,
wherein, the organic solvent includes a nitrile-based solvent.

As a preferred technical solution of the present disclosure, the organic solvent further includes a carbonate solvent.

Preferably, the volume ratio of the carbonate solvent to the nitrile-based solvent is (70-50): (30-50), wherein the selection range of the carbonate solvent is "70-50", for example, it can be 70, 60, or 50, and so on, and the selection range of the nitrile-based solvent is "30-50", for example, it can be 30, 40, or 50, and so on.

Preferably, a method of the mixing includes:
mixing the carbonate solvent and the nitrile-based solvent, then adding the lithium salt and mixing, followed by adding the additive and mixing.

As a preferred technical solution of the present disclosure, the preparation method includes following steps:
(1) mixing ethylene carbonate, ethyl methyl carbonate, dimethyl carbonate, and acetonitrile in a volume ratio of (15-35): (15-45): (0-30): (30-50) with stirring to obtain an organic solvent;
(2) adding lithium hexafluorophosphate and lithium bis(fluorosulfonyl)imide in a total content of 14.5wt%-18wt% to the organic solvent, and mixing with stirring to obtain a mixed solution;
(3) adding a pyridine-based additive, a lithium salt additive, and an ester-based additive to the mixed solution, and mixing with stirring to obtain the lithium-ion battery electrolyte.

In the third aspect, the present disclosure provides a lithium-ion battery, the lithium-ion battery includes a positive electrode sheet, a negative electrode sheet and a lithium-ion battery electrolyte as in the first aspect.

As a preferred technical solution of the present disclosure, the preparation method for the positive electrode sheet includes:
adding a positive electrode active material, a conductive agent (for example, it can be conductive carbon black), a binder (for example, it can be PVDF, acrylonitrile-acrylate, or PTFE), and a dispersant (for example, it can be CGI-QC) to an organic solvent (for example, it can be N-methylpyrrolidone), stirring and mixing uniformly to obtain a positive electrode slurry with a solid content of 50%-60% (for example, it can be 50%, 52%, 54%, 56%, 58%, or 60%, and so on); coating the positive electrode slurry onto a positive electrode current collector aluminum foil to obtain a positive electrode roll with a single-sided positive electrode sheet surface density of 15 mg/cm² to 20 mg/cm² (for example, it can be 15 mg/cm², 16 mg/cm², 17 mg/cm², 18 mg/cm², 19 mg/cm², or 20 mg/cm², and so on); and drying, rolling and slitting the positive electrode roll to obtain the positive electrode sheet.

Preferably, the positive electrode active material includes lithium iron phosphate positive electrode material.

As a preferred technical solution of the present disclosure, the preparation method for the negative electrode sheet includes:
dissolving a negative electrode active material, a conductive agent (for example, it can be conductive carbon black), a binder ((for example, it can be polyacrylonitrile and/or styrene-butadiene rubber), and a thickener (for example, it can be sodium carboxymethyl cellulose) in deionized water, mixing uniformly to obtain a negative electrode slurry with a solid content of 45%-50% (for example, it can be 45%, 46%, 47%, 48%, 49%, or 50%, and so on); and coating the negative electrode slurry onto a negative electrode current collector copper foil, and then drying, rolling and slitting to obtain the negative electrode sheet.

Preferably, the negative electrode material includes artificial graphite.

As a preferred technical solution of the present disclosure, the particle size D50 of the negative electrode active material in the negative electrode sheet is 13 µm-14 µm, for example, it can be 13 µm, 13.2 µm, 13.4 µm, 13.6 µm, 13.8 µm, or 14 µm, and so on.

Preferably, the BET specific surface area of the negative electrode active material is 0.5 m²/g-2 m²/g, for example, the BET specific surface area can be 0.5 m²/g, 1 m²/g, 1.5 m²/g, or 2 m²/g, and so on.

It should be noted that a separator is a commercially available polypropylene film coated with ceramic layers or PVDF layers on both sides.

A numerical range in the present disclosure include not only the point values listed above, but also any point values within the range not listed above. Due to space limitations and for the sake of brevity, the present disclosure will not exhaustively list all the specific point values included in the range.

Compared with the prior art, the present disclosure has following beneficial effects:
(1) The present disclosure designs a lithium-ion battery electrolyte that satisfies the above relational expression. This type of electrolyte can not only effectively inhibit the reductive decomposition of a nitrile-based solvent and has a characteristic of weak solvation binding energy, but also maintain high ionic conductivity at low temperatures. At high rates, solvated lithium-ions can be quickly desolvated, exhibiting good fast-charging performance. Meanwhile, fast lithium-ion transport at low temperatures and desolvation can ensure that the battery has excellent low-temperature capacity retention, effectively improving battery performance, such as safety, energy density, power, rate and cycling performance.
(2) The electrolyte provided by the present disclosure exhibits good compatibility with negative electrode, does not cause damage to the negative electrode, and can form an SEI film on the negative electrode, inhibiting a reaction at the interface between the electrolyte and the negative electrode material, reducing HF generation, and solving the problem such as battery swelling and fast capacity decay during cycling/high-temperature storage.

### DETAILED DESCRIPTION OF EMBODIMENTS

The technical solution of the present disclosure will be further illustrated below through specific embodiments. Those skilled in the art should understand that the embodiments are merely intended to assist in understanding the present disclosure and should not be regarded as specific limitations to the present disclosure.

It should be noted that in following embodiments, room temperature refers to 25 °C.

### Example 1

The present example provided a lithium-ion battery electrolyte, wherein the lithium-ion battery electrolyte included a lithium salt, an organic solvent and an additive, and the organic solvent included a nitrile-based solvent and a carbonate solvent; and
the room temperature conductivity σ of the lithium-ion battery electrolyte satisfied following relational expression:
15 ≤ (K×ε×γ)/µ ≤ 30, wherein, K=0.06, ε is the dielectric constant, γ is the mass fraction of the nitrile-based solvent in the lithium-ion battery electrolyte, and µ is the viscosity of the lithium-ion battery electrolyte at room temperature. The room temperature conductivity σ was 17.5 mS·cm⁻¹, and µ was 1.89 mPa·s, ε was 30.44 and γ was 18.17wt %.

The nitrile-based solvent was acetonitrile; the carbonate solvent included ethylene carbonate, ethyl methyl carbonate, and dimethyl carbonate; the additives included a pyridine-based additive, a lithium salt additive, and an ester-based additive; the content of the pyridine-based additive accounted for 5.5wt% of the content of the nitrile-based solvent, and the pyridine-based additive was pyridine; the content of the lithium salt additive accounted for 0.5wt% of the total amount of the lithium-ion battery electrolyte, and the lithium salt additive was difluorooxalate borate; the content of the ester-based additive accounted for 4wt% of the total amount of the lithium-ion battery electrolyte; the ester-based additive included vinylene carbonate, fluoroethylene carbonate, and methylene methanedisulfonate in a mass ratio of 2:1:1;

The lithium salt included lithium hexafluorophosphate and lithium bis(fluorosulfonyl)imide in a mass ratio of 11.88 : 3.08. The concentration of the lithium salt in the lithium-ion battery electrolyte was 1.5 mol/L, and the content of the lithium salt accounted for 14.95wt% of the total amount of the lithium-ion battery electrolyte.

The present example further provided a preparation method for the lithium-ion battery electrolyte, and the preparation method includes following steps:

In a nitrogen glove box, ethylene carbonate, ethyl methyl carbonate, dimethyl carbonate, and acetonitrile were mixed uniformly in a volume ratio of 25:25:20:30. Then, lithium hexafluorophosphate and lithium bis(fluorosulfonyl)imide were added and mixed uniformly. After mixing uniformly, vinylene carbonate, fluoroethylene carbonate, methylene methanedisulfonate, difluorooxalate borate, and pyridine were added and mixed uniformly to obtain the lithium-ion battery electrolyte.

### Example 2

The difference between the present example and Example 1 was that the volume ratio of ethylene carbonate, ethyl methyl carbonate, dimethyl carbonate, and acetonitrile was adjusted to 25:25:10:40, so that K=0.038, σ was 18.5mS·cm⁻¹, µ was 1.72mPa·s, ε was 33.27 and γ was 24.9wt %.

The remaining preparation method and parameters were consistent with those in Example 1.

### Example 3

The difference between the present example and Example 1 was that the carbonate solvent included ethylene carbonate and ethyl methyl carbonate, and the volume ratio of ethylene carbonate, ethyl methyl carbonate and acetonitrile was 25:25:50, so that K=0.029, σ was 20.4 mS·cm⁻¹, µ was 1.68 mPa·s, ε was 36.27, and γ was 32.03wt %.

The remaining preparation methods and parameters were consistent with those in Example 1.

### Example 4

The difference between the present example and Example 1 was that the carbonate solvent included ethylene carbonate and ethyl methyl carbonate, and the volume ratio of ethylene carbonate, ethyl methyl carbonate and acetonitrile were 25:15:60, so that K=0.023, σ was 21.6 mS·cm⁻¹, µ was 1.62 mPa·s, ε was 39.24, and γ was 39.34wt %.

The remaining preparation methods and parameters were consistent with those in Example 1.

### Example 5

The difference between the present example and Example 3 was that the content of the pyridine-based additive accounted for 1.55wt% of the content of the nitrile-based solvent.

The remaining preparation methods and parameters were consistent with those in Example 3.

### Example 6

The difference between the present example and Example 3 was that the content of the pyridine-based additive accounted for 6.23wt% of the content of the nitrile-based solvent.

The remaining preparation methods and parameters were consistent with those in Example 3.

### Example 7

The difference between the present example and Example 1 was that the volume ratio of ethylene carbonate, ethyl methyl carbonate, dimethyl carbonate, and acetonitrile was adjusted to 25:45:15:15, so that K=0.125, σ was 12.37 mS·cm⁻¹, µ was 2.38 mPa·s, ε was 26.71 and γ was 8.82wt %.

The remaining preparation methods and parameters were consistent with those in Example 1.

### Example 8

The difference between the present example and Example 1 was that the carbonate solvent was ethylene carbonate, and the volume ratio of ethylene carbonate to acetonitrile was 25:75, so that K=0.016, σ was 23.48 mS·cm⁻¹, µ was 1.54 mPa·s, ε was 43.95, and γ was 50.97wt%.

The remaining preparation methods and parameters remained consistent with those in Example 1.

### Example 9

The difference between the present example and Example 3 was that no pyridine-based additive was added.

The remaining preparation methods and parameters were consistent with those in Example 3.

### Example 10

The difference between the present example and Example 3 was that the content of the pyridine-based additive accounted for 0.62wt% of the content of the nitrile-based solvent.

The remaining preparation methods and parameters were consistent with those in Example 3.

### Example 11

The difference between the present example and Example 3 was that the content of the pyridine-based additive accounted for 27.38wt% of the content of the nitrile-based solvent.

The remaining preparation methods and parameters were consistent with those in Example 3.

### Comparative Example 1

The difference between the present comparative example and Example 1 was that no acetonitrile was added. That is, ethylene carbonate, ethyl methyl carbonate and dimethyl carbonate were mixed in a volume ratio of 25:45:30, so that K=0.02, σ was 10.54 mS·cm⁻¹, µ was 2.38 mPa·s, ε was 22.99 and γ was 0.

The remaining preparation methods and parameters were consistent with those in Example 1.

### Performance test

(1) Conductivity tests were conducted on the electrolytes prepared in above examples and comparative example at different temperatures, and the test results are shown in Table 1.

**Table 1**

| | Conductivity σ (mS·cm⁻¹) | | | |
|---|---|---|---|---|
| | -20 °C | 0 °C | 25 °C | 45 °C |
| Example 1 | 9.95 | 13.23 | 17.55 | 20.97 |
| Example 2 | 8.63 | 12.15 | 18.31 | 21.37 |
| Example 3 | 10.27 | 15.78 | 20.7 | 23.55 |
| Example 4 | 11.24 | 16.43 | 21.6 | 24.69 |
| Example 5 | 10.31 | 15.82 | 20.98 | 23.74 |
| Example 6 | 10.13 | 15.65 | 20.43 | 23.29 |
| Example 7 | 7.31 | 11.67 | 14.38 | 18.35 |
| Example 8 | 11.78 | 18.94 | 23.35 | 25.68 |
| Example 9 | 10.72 | 15.94 | 20.96 | 23.85 |
| Example 10 | 10.33 | 15.85 | 20.97 | 23.78 |
| Example 11 | 9.22 | 13.64 | 17.55 | 20.35 |
| Comparative Example 1 | 3.87 | 6.61 | 10.64 | 13.74 |

### Analysis:

As can be seen from Table 1, when a low-viscosity solvent acetonitrile is added, the conductivity of the electrolyte can be significantly improved, making a greater contribution to the low temperature conductivity.

### (II) Test of electrochemical performance of battery

A positive electrode sheet, a separator, and a negative electrode sheet were arranged in sequence and stacked using a fast stacking technology to obtain an electrode assembly. The electrode assembly was then welded into a casing (aluminum-plastic film) via positive and negative tabs, side-sealed, top-sealed, dried, and injected with the above electrolyte (4Ah, injection coefficient of 3.3 g/Ah). A lithium-ion battery was obtained after processes, such as settling, precharging, secondary injection of electrolyte, and formation.

The preparation method for the positive electrode sheet included: lithium iron phosphate positive electrode material, conductive carbon black, a binder (polyvinylidene fluoride binder), and a dispersant (LIB-D300) were added to N-methylpyrrolidone (NMP) in a mass ratio of 96.9%: 1.5%: 1.5%: 0.1%. After thorough stirring and mixing, a positive electrode slurry (58% solid content) was obtained. The positive electrode slurry was uniformly coated onto a positive electrode current collector aluminum foil to obtain a positive electrode roll with a single-sided positive electrode sheet surface density of 18 mg/cm², and a positive electrode sheet was obtained by drying, rolling and slitting.

The preparation method for the negative electrode sheet included: a negative electrode active material (artificial graphite (particle size D50 of 13.5 µm and BET specific surface area of the material of 1 m²/g)), conductive carbon black, a binder (polyacrylonitrile and styrene-butadiene rubber), and a thickener (sodium carboxymethyl cellulose), in a weight ratio of 95.7: 1.0: (2.32+0.58): 0.4, were dissolved in deionized water. After uniform mixing, a negative electrode slurry (solid content of 48%) was prepared. The negative electrode slurry was uniformly coated onto a negative electrode current collector copper foil, and a negative electrode sheet was obtained by drying, roll-pressing and slitting.

A separator was a commercially available polypropylene film with ceramic layers coated on both sides.

Specific steps for preparing a secondary electrolyte injection for the secondary injection included: ethylene carbonate, ethyl methyl carbonate, and dimethyl carbonate were mixed uniformly in a volume ratio of 30: 40: 30, with ethylene carbonate accounting for 14% of the mass of the secondary electrolyte injection; then lithium hexafluorophosphate at a concentration of 12.5% was added and mixed uniformly to obtain the secondary electrolyte injection; during the secondary injection, the mass ratio of the primary electrolyte injection to the secondary electrolyte injection was 9:1.
1) Rate performance of the lithium-ion batteries prepared above were tested, and capacity retention was recorded as XC charging capacity /0.33 C discharging capacity, with X being 1, 2, 3, 4 and 5.

Test results are shown in Table 2.

**Table 2**

| | Capacity Retention (%) | | | | |
|---|---|---|---|---|---|
| | 1C | 2C | 3C | 4C | 5C |
| Example 1 | 99.35 | 97.27 | 94.78 | 92.74 | 91.05 |
| Example 2 | 99.52 | 97.49 | 95.54 | 93.53 | 92.35 |
| Example 3 | 99.71 | 97.93 | 95.87 | 93.79 | 92.76 |
| Example 4 | 99.92 | 98.24 | 96.31 | 94.24 | 93.12 |
| Example 5 | 99.78 | 98.02 | 95.94 | 93.83 | 92.86 |
| Example 6 | 99.67 | 97.63 | 95.57 | 93.69 | 92.53 |
| Example 7 | 99.21 | 97.01 | 94.58 | 92.34 | 90.85 |
| Example 8 | 99.93 | 98.35 | 96.87 | 94.64 | 93.47 |
| Example 9 | 97.02 | 96.32 | 94.35 | 90.24 | 88.35 |
| Example 10 | 99.82 | 98.08 | 95.98 | 93.87 | 92.89 |
| Example 11 | 99.32 | 97.47 | 95.29 | 93.31 | 92.04 |
| Comparative Example 1 | 98.78 | 94.56 | 92.31 | 90.64 | 88.75 |

### Analysis:

As can be seen from Table 2, when an acetonitrile-based solvent is used, viscosity thereof is reduced, dielectric constant is increased, lithium-ion dissociation degree is enhanced, and conductivity of the electrolyte is improved. The resulting rate performance is significantly better than that of using a carbonate solvent, and with the increase of acetonitrile content, the rate performance is correspondingly improved.

As can be seen from Example 1 and Examples 7-8, if the mass fraction of the nitrile-based solvent in the lithium-ion battery electrolyte is too small, the viscosity of the electrolyte is slightly high, the ability to dissociate lithium-ions is weaker, the conductivity is too low, and the rate performance deteriorates. If the mass fraction of the nitrile-based solvent in the lithium-ion battery electrolyte is too large, the conductivity is significantly improved, and the rate performance is significantly superior. However, exfoliation of the graphite negative electrode will lead to a sudden capacity drop and gas evolution during cycling.

From Example 3 and Example 9, it can be seen that without the addition of the pyridine-based additive, the negative electrode protection effect is poor, and acetonitrile undergoes reduction, resulting in exfoliation of the graphite negative electrode and poor rate performance.

As shown in Example 3 and Examples 10-11, if the content of the pyridine-based additive is too small relative to the content of the nitrile solvent, the impedance is low, and the rate performance is slightly improved; and if the content of the pyridine-based additive is too large relative to the content of the nitrile solvent, the SEI film is denser, the SEI impedance of the battery cell increases, leading to a decrease in the rate performance.

2) The lithium-ion batteries prepared above were subjected to high-temperature storage experiments after capacity grading. First, the batteries were charged and discharged three times at 0.33C/1C (3.65/2.0V) at room temperature (the last discharge capacity was recorded as DC0). Then, the fully charged (DOD=100SOC%) battery cells were stored in a 60 °C oven for 60 days. followed by leaving to stand at room temperature for 4 h after removal, and then discharging at 1 C at room temperature (recorded as DC1). Then three charge-discharge cycles were performed, and the capacity of the last discharge was recorded as DC2. The capacity retention and recovery rates of the lithium-ion batteries were calculated.

Test results are shown in Table 3.

**Table 3**

| | 60 °C/60-Day Storage | | |
|---|---|---|---|
| | Capacity Retention (%) | Capacity Recovery Rate (%) | Volume expansion (%) |
| Example 1 | 91.10 | 92.30 | 1.7 |
| Example 2 | 91.59 | 92.76 | 1.6 |
| Example 3 | 90.56 | 91.78 | 1.5 |
| Example 4 | 90.67 | 91.93 | 1.8 |
| Example 5 | 91.23 | 92.05 | 1.7 |
| Example 6 | 91.46 | 92.48 | 1.3 |
| Example 7 | 91.65 | 92.94 | 1.5 |
| Example 8 | 89.75 | 90.44 | 1.8 |
| Example 9 | 86.47 | 87.64 | 2.0 |
| Example 10 | 88.52 | 89.73 | 1.8 |
| Example 11 | 88.43 | 88.32 | 1.3 |
| Comparative Example 1 | 89.94 | 90.54 | 1.4 |

### Analysis:

Table 3 shows that the lithium-ion battery prepared by the present disclosure exhibits a capacity recovery rate greater than 91.5% after 60 days of high-temperature storage. Optimization of the formulation of the electrolyte allows for adding a large amount of acetonitrile without degrading the storage performance.

As can be seen from Example 1 and Examples 7-8, if the mass fraction of the nitrile-based solvent in the lithium-ion battery electrolyte is too small, the compatibility with the negative electrode is stronger, resulting in a slight improvement in the storage performance. If the mass fraction of the nitrile-based solvent in the lithium-ion battery electrolyte is too large, the pyridine film formation is insufficient to inhibit the reduction of acetonitrile at the negative electrode, leading to a decrease in storage capacity retention and increased gas evolution.

As can be seen from Example 3 and Example 9, without the addition of the pyridine-based additive, the capacity retention and the capacity recovery rate are significantly reduced, and gas evolution is high.

As can be seen from Example 3 and Examples 10-11, both excessively small and excessively large ratios of the content of the pyridine-based additive to the content of the nitrile-based solvent will deteriorate the electrochemical performance of the lithium-ion battery.

3) The prepared lithium-ion battery was subjected to cycle testing under conditions of 25°C and 45°C by performing a 20-80% SOC 15-minute step cycle until reaching 3.65 V, followed by a constant-current discharge at 1 C rate to 2.0 V.

Test results are shown in Table 4.

**Table 4**

| Group | 25 °C & SC (Step Charging) /1C Cycle for 2000 Cycles | 45 °C & SC (Step Charging) /1C Cycle for 1500 Cycles | |
|---|---|---|---|
| | Capacity Retention (%) | Capacity Retention (%) | Volume expansion Ratio (%) |
| Example 1 | 87.3 | 88.5 | 1.0 |
| Example 2 | 86.2 | 87.8 | 1.2 |
| Example 3 | 85.4 | 87.1 | 1.3 |
| Example 4 | 85.3 | 86.7 | 1.3 |
| Example 5 | 86.4 | 86.5 | 1.4 |
| Example 6 | 85.8 | 85.2 | 0.9 |
| Example 7 | 1200 Cycles @70% | 84.6 | 0.7 |
| Example 8 | 78.2 | 80.4 | 1.8 |
| Example 9 | 600 Cycles @70% | 900 Cycles @70% | 2.1 |
| Example 10 | 81.2 | 76.7 | 1.5 |
| Example 11 | 82.4 | 78.1 | 0.6 |
| Comparative Example 1 | 800 Cycles @70% | 75.4 | 3.5 |

### Analysis:

Table 4 shows that compared with the solution without acetonitrile, the use of acetonitrile as solvent results in increased cycling life and less gas evolution. Using only the carbonate solvent results in low viscosity and conductivity of the electrolyte as well as insufficient kinetics of the battery cells, leading to an insufficient room temperature charging capability, and lithium plating-induced sudden failure.

As can be seen from Example 1 and Examples 7-8, if the mass fraction of the nitrile-based solvent in the lithium-ion battery electrolyte is too small, the viscosity of the electrolyte is slightly higher, the ability to dissociate lithium-ions is weaker, the conductivity is low, and fast-charging performance decreases. If the mass fraction of the nitrile-based solvent in the lithium-ion battery electrolyte is too large, the pyridine film formation is insufficient to inhibit the reduction of acetonitrile at the negative electrode, resulting in insufficient repair of the SEI film during cycling, leading to a slightly lower cycling capacity retention and increased gas evolution.

As can be seen from Example 3 and Example 9, when using the acetonitrile-based solvent, the pyridine-based additive must be added to protect the negative electrode. Pyridine ring compounds can participate in polymerization at the negative electrode of the lithium-ion battery, forming a dense and stable protective film, improving the stability of the SEI film, inhibiting the volume expansion of the negative electrode active material during charging and discharging, and improving cycling performance.

As can be seen from Example 3 and Examples 10-11, if the amount of the pyridine-based additive added is too high, the DCR increase becomes excessive, and the room temperature cycling performance deteriorates significantly. If the amount of the pyridine-based additive added is too low, the reduction of acetonitrile at the graphite negative electrode cannot be completely inhibited, leading to increased gas evolution and deteriorated cycling performance.

In summary, when using the nitrile-based solvent, it is necessary to use an appropriate amount of pyridine-based additive to adequately protect the negative electrode, improve the compatibility between acetonitrile and the negative electrode, thereby improving cycling performance and mitigating gas evolution.

The applicant declares that the present disclosure is illustrated by the above embodiments, but the present disclosure is not limited to the above embodiments, that is, it does not mean that the present disclosure must rely on the above embodiments to be implemented. Those skilled in the art should understand that any improvements to the present disclosure, equivalent substitutions of raw materials of a product of the present disclosure, addition of auxiliary components, and selection of specific methods, etc., all fall within the protection scope and disclosure scope of the present disclosure.

## Claims

1. A lithium-ion battery electrolyte, comprising a lithium salt, an organic solvent and an additive, wherein the organic solvent comprises a nitrile-based solvent; and
wherein a room temperature conductivity σ of the lithium-ion battery electrolyte satisfies following relational expression:
15 ≤ (K×ε×γ)/µ ≤ 30, wherein, K=0.02-0.07, ε is dielectric constant, γ is mass fraction of the nitrile-based solvent in the lithium-ion battery electrolyte, and µ is viscosity of the lithium-ion battery electrolyte at room temperature.

2. The lithium-ion battery electrolyte according to claim 1, wherein the room temperature conductivity σ is 15-30 mS·cm⁻¹;
preferably, the µ is 1.5-2.1 mPa·s;
preferably, the ε is 20-40; and
preferably, the γ is 15wt%-50wt%.

3. The lithium-ion battery electrolyte according to claim 1 or 2, wherein structural formula of the nitrile-based solvent is 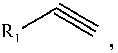 wherein R₁ is -CₙH₂ₙ₊₁ or R₁ is -C₆H₅, and n=1-4;
preferably, the organic solvent further comprises a carbonate solvent; and
preferably, the carbonate solvent comprises a combination of any two or at least three selected from the group consisting of ethylene carbonate, propylene carbonate, ethyl methyl carbonate, diethyl carbonate, and dimethyl carbonate.

4. The lithium-ion battery electrolyte according to any one of claims 1 to 3, wherein the additive comprises any one or a combination of at least two selected from the group consisting of a pyridine-based additive, a lithium salt additive, and an ester-based additive, preferably a combination of the pyridine-based additive, the lithium salt additive, and the ester-based additive;
preferably, a content of the pyridine-based additive accounts for 1wt%-9wt% of a content of the nitrile-based solvent;
preferably, structural formula of the pyridine-based additive is 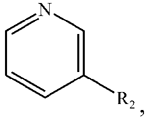 wherein R₂ is any one of -H, -F, -CₙH₂ₙ₊₁, or -CₙH₂ₙ₋₁, and n=1-3;
preferably, the lithium salt additive comprises any one or a combination of at least two selected from the group consisting of an oxalatoborate, an oxalatophosphate, and a difluorophosphate;
preferably, the ester-based additive comprises a combination of any three or at least four selected from the group consisting of vinylene carbonate, vinyl ethylene carbonate, fluoroethylene carbonate, ethylene sulfate, and methylene methanedisulfonate;
preferably, a content of the lithium salt additive accounts for 0.1wt%-0.8wt% of a total amount of the lithium-ion battery electrolyte; and
preferably, a content of the ester-based additive accounts for 2wt%-7wt% of the total amount of the lithium-ion battery electrolyte.

5. The lithium-ion battery electrolyte according to any one of claims 1 to 4, wherein the lithium salt comprises lithium hexafluorophosphate and lithium bis(fluorosulfonyl)imide;
preferably, a concentration of the lithium salt in the lithium-ion battery electrolyte is 0.8 mol/L -2.5 mol/L; and
preferably, a content of the lithium salt accounts for 10wt%-20wt% of the total amount of the lithium-ion battery electrolyte, preferably 14.5wt%-18wt%.

6. A preparation method for the lithium-ion battery electrolyte according to any one of claims 1 to 5, comprising following steps:
mixing a lithium salt, an additive, and an organic solvent to obtain the lithium-ion battery electrolyte,
wherein the organic solvent comprises a nitrile-based solvent.

7. The preparation method according to claim 6, wherein the organic solvent further comprises a carbonate solvent;
preferably, a volume ratio of the carbonate solvent to the nitrile-based solvent is (70-50): (30-50);
preferably, a method of the mixing comprises:
mixing the carbonate solvent and the nitrile-based solvent, then adding the lithium salt and mixing, followed by adding the additive and mixing.

8. The preparation method according to claim 6 or 7, wherein, the preparation method comprises following steps:
(1) mixing ethylene carbonate, ethyl methyl carbonate, dimethyl carbonate, and acetonitrile in a volume ratio of (15-35): (15-45): (0-30): (30-50) with stirring to obtain an organic solvent;
(2) adding lithium hexafluorophosphate and lithium bis(fluorosulfonyl)imide in a total content of 14.5wt%-18wt% to the organic solvent, and mixing with stirring to obtain a mixed solution;
(3) adding a pyridine-based additive, a lithium salt additive, and an ester-based additive to the mixed solution, and mixing with stirring to obtain the lithium-ion battery electrolyte.

9. A lithium-ion battery, comprising a positive electrode sheet, a negative electrode sheet, and the lithium-ion battery electrolyte according to any one of claims 1 to 5.

10. The lithium-ion battery according to claim 9, wherein a particle size D50 of a negative electrode active material in the negative electrode sheet is 13 µm-14 µm; and
preferably, a BET specific surface area of the negative electrode active material is 0.5 m²/g-2 m²/g.
